# EUROPEAN PATENT APPLICATION

(11) **EP 3 206 188 A1**
(43) Date of publication of application: **16.08.2017**
(21) Application number: 16763711.5
(22) Date of filing: 04.07.2016
(51) Int. Cl.: G06T 7/20, G06T 7/246

(54) **METHOD AND SYSTEM FOR REALIZING MOTION-SENSING CONTROL BASED ON INTELLIGENT DEVICE, AND INTELLIGENT DEVICE**

(30) Priority: 31.12.2015 CN 201511034014
(71) Applicant: LE Holdings (Beijing) Co., Ltd., Beijing 100025 (CN); Lemobile Information Technology (Beijing) Co., Ltd., Beijing 101300 (CN)
(72) Inventor: CHEN, Jianru, Gaoliying Town, Shunyi District Beijing 101300 (CN)
(74) Representative: Behr, Wolfgang
(86) International application number: PCT/CN2016/088314
(87) International publication number: WO 2017/113674

(57) **Abstract**

The present invention discloses an intelligent equipment-based motion sensing control method and system, and an intelligent equipment. The method includes: collecting user image data; according to the user image data, acquiring an image contour of a user; according to the image contour, acquiring a first motion track of the user on an imaging plane; according to the change of a characteristic length on the image contour and/or the change of a focal distance of a camera, acquiring a second motion track of the user in a direction perpendicular to the imaging plane; and according to the first motion track and the second motion track, generating motion sensing data.

## Description

This application is based upon and claims priority to Chinese Patent Application No. 201511034014.6, filed on December 31, 2015, titled "Intelligent Equipment-Based Motion Sensing Control Method and System, and Intelligent Equipment", and the entire contents of which are incorporated herein by reference.

### TECHNICAL FIELD

The present invention relates to the field of the computer vision technology, and particularly relates to an intelligent equipment-based motion sensing control method and system, and an intelligent equipment.

### BACKGROUND

With the development of the computer vision technology, a motion sensing game gradually enters people's lives. A motion sensing game machine operates a game by sensing the action of a human body through a motion sensing camera in comparison with the original mode of operating a game by a gamepad or a joystick, for example, an Xbox360 motion sensing game machine (Kinect) produced by Microsoft Corporation acquires the action of a human body through three motion sensing cameras and converts same into an operation instruction to control a game, so that people can obtain better operation experience when playing a game, and the human body can be exercised in a state of motion.
However, at present, some users are obstructed from experiencing a motion sensing game because the motion sensing camera is relatively expensive. Because the popularity of the intelligent equipment such as a smart cellphone, a tablet personal computer, etc. is very wide, if a camera on a smart cellphone can be used as a motion sensing camera, the application of the motion sensing technology such as a motion sensing game, etc. in people's lives will be greatly promoted.

### SUMMARY

The technical problem to be solved in the present invention is that the application of the motion sensing technology in people's lives is obstructed because the motion sensing camera is expensive.

Thus, the embodiments of the present invention provide an intelligent equipment-based motion sensing control method, the intelligent equipment being provided with a camera, the method includes collecting user image data; acquiring an image contour of a user, according to the user image data; acquiring a first motion track of the user on an imaging plane, according to the image contour; acquiring a second motion track of the user in a direction perpendicular to the imaging plane, according to the change of a characteristic length on the image contour and/or the change of a focal distance of the camera; and generating motion sensing data, according to the first motion track and the second motion track.

Preferably, the characteristic length includes a hand contour length/width, a leg contour length/width or a head contour length/width.

Preferably, the method further includes separating a user image from a foreground and a background, between the steps of collecting user image data and acquiring an image contour of a user according to the user image data.

Preferably, the method further includes calibrating the second motion track, between the steps of acquiring a second motion track of the user in a direction perpendicular to the imaging plane according to the change of a characteristic length on the image contour and/or the change of a focal distance of the camera and generating motion sensing data according to the first motion track and the second motion track, according to the distance from each portion of the body of the user to the camera, which is obtained by the measurement of a distance measurement module.
Preferably, the distance measurement module is an infrared distance measurement module or a laser distance measurement module.

The embodiments of the present invention provide an intelligent equipment-based motion sensing control system, the intelligent equipment being provided with a camera, wherein, the system includes a collection unit for collecting user image data; an image contour acquisition unit for acquiring an image contour of a user according to the user image data; a first motion track unit for acquiring a first motion track of the user on an imaging plane according to the image contour; a second motion track unit for acquiring a second motion track of the user in a direction perpendicular to the imaging plane according to the change of a characteristic length on the image contour and/or the change of a focal distance of the camera; and a motion sensing data unit for generating motion sensing data according to the first motion track and the second motion track.

Preferably, the system further includes a separation unit for separating a user image from a foreground and a background between the steps of collecting, by the collection unit, user image data and acquiring, by the image contour acquisition unit, an image contour of a user according to the user image data.

Preferably, the system further includes a correction unit for calibrating the second motion track according to the distance, which is obtained by the measurement of a distance measurement module, from each portion of the body of the user to the camera between the steps of acquiring, by the second motion track unit, a second motion track of the user in a direction perpendicular to the imaging plane according to the change of a characteristic length on the image contour and/or the change of a focal distance of the camera and generating, by the motion sensing data unit, motion sensing data according to the first motion track and the second motion track. The embodiments of the present invention provide an intelligent equipment, comprising a camera for collecting user image data; and a processor for acquiring an image contour of a user according to the user image data, acquiring a first motion track of the user on an imaging plane according to the image contour, acquiring a second motion track of the user in a direction perpendicular to the imaging plane according to the change of a characteristic length on the image contour and/or the change of a focal distance of the camera, and generating motion sensing data according to the first motion track and the second motion track.

Preferably, the processor is also used for receiving the distance, which is obtained by the measurement of an external distance measurement module, from each portion of the body of the user to the camera, and calibrating the second motion track according to the distance.

The embodiments of the present invention provide an intelligent equipment-based motion sensing control system, the intelligent equipment being provided with a camera, the system includes one or more processors; a memory; and one or more programs, stored in the memory, and when executed by the one or more processors performing the following steps of acquiring an image contour of a user, according to the user image data, acquiring a first motion track of the user on an imaging plane, according to the image contour; acquiring a second motion track of the user in a direction perpendicular to the imaging plane, according to the change of a characteristic length on the image contour and/or the change of a focal distance of the camera; and generating motion sensing data, according to the first motion track and the second motion track.

Preferably, the system includes separating a user image from a foreground and a background between the steps of collecting user image data and acquiring an image contour of a user according to the user image data.

Preferably, the system further includes calibrating the second motion track, between the steps of acquiring a second motion track of the user in a direction perpendicular to the imaging plane according to the change of a characteristic length on the image contour and/or the change of a focal distance of the camera and generating motion sensing data according to the first motion track and the second motion track, according to the distance from each portion of the body of the user to the camera, which is obtained by the measurement of a distance measurement module.

For the intelligent equipment-based motion sensing control method and system and the intelligent equipment according to the embodiments of the present invention, only a camera on the intelligent equipment such as a smart cellphone, etc. is used to acquire user image data and obtain a first motion track of a user on an imaging plane and a second motion track in a direction perpendicular to the imaging plane according to the image data, thereby obtaining a motion track of the user in a three-dimensional space so as to generate motion sensing data, and therefore, the user can experience the motion sensing technology without additional equipment, which is beneficial to the popularization and application of the motion sensing technology.

### BRIEF DESCRIPTION OF DRAWINGS

The features and advantages of the present invention may be understood more clearly by reference to the drawings, and the drawings are illustrative and should not be understood as any limitation to the present invention, including:
Fig. 1 shows a schematic diagram of an application scenario of intelligent equipment-based motion sensing control according to the embodiments of the present invention;
Fig. 2 shows a flow diagram of an intelligent equipment-based motion sensing control method according to the embodiments of the present invention;

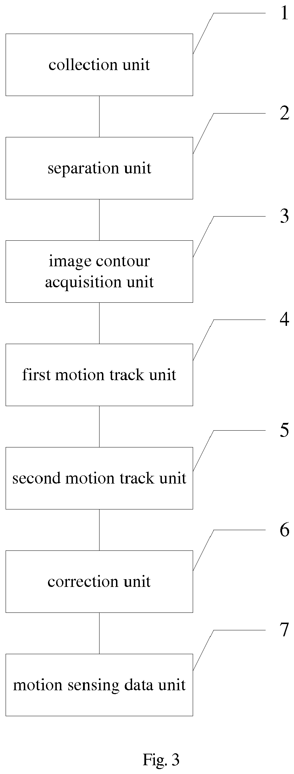

Fig. 3 shows a schematic diagram of an intelligent equipment-based motion sensing control system according to the embodiments of the present invention;
Fig. 4 shows a schematic diagram of an intelligent equipment-based motion sensing control system with one processor in the embodiments of the present invention; and
Fig. 5 shows a schematic diagram of an intelligent equipment-based motion sensing control system with two processors in the embodiments of the present invention.

### Detailed Description of the Embodiments

The embodiments of the present invention will be described below in detail in conjunction with the accompanying drawings.

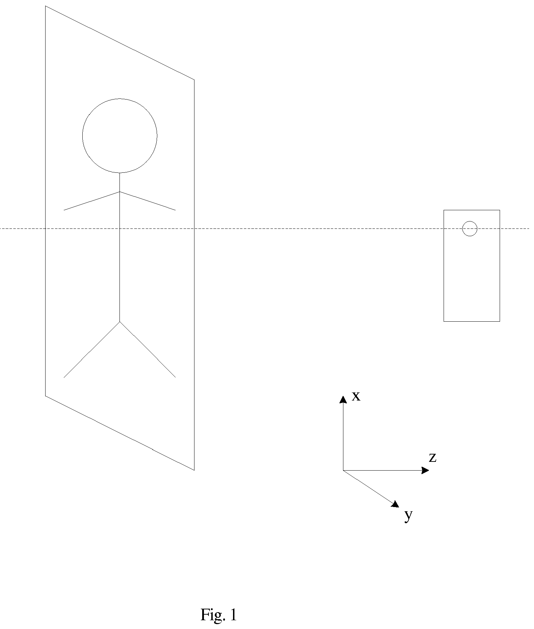

As shown in Fig. 1, for the intelligent equipment-based motion sensing control method according to the embodiments of the present invention, an intelligent equipment which is provided with a camera is required, and the intelligent equipment can be a smart cellphone, a tablet personal computer, a laptop, etc. Preferably, a user needs to keep a certain distance from the camera of the intelligent equipment, so as to enable the camera to collect the image data of the whole body of the user. Of course, some motion sensing control only needs hand actions for control, and in this case, the camera only collects the image data of the hand of the user.

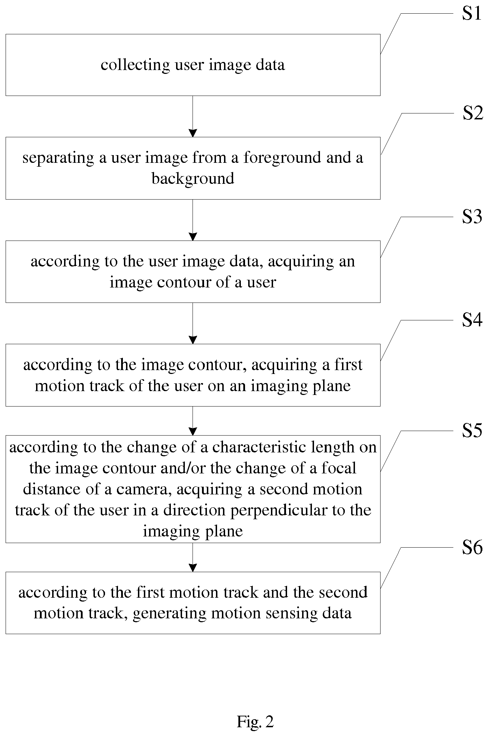

As shown in Fig. 2, the embodiments of the present invention provide an intelligent equipment-based motion sensing control method, the intelligent equipment being provided with a camera. The method includes the following steps:
S1. collecting user image data. As shown in Fig. 1, the camera collects image data of a user on an imaging plane, i.e. an x-y plane.
S2. separating a user image from a foreground and a background. This step is an optional step, in this step, the user image can be separated from the foreground and the background by using any of the existing image separation methods, and therefore, the interference of the foreground and background images can be reduced, thereby reducing the computational load of the post processing of a processor.
S3. acquiring an image contour of the user according to the user image data. For motion sensing control, there is only a need to acquire a motion track of the body of the user, and therefore, there is no need to pay attention to other details of a user body image. The computational load of the post processing of the processor can be reduced by extracting the image contour.
S4. acquiring a first motion track of the user on the imaging plane according to the image contour. The image is collected in real time, so that according to the change of previous and next frame images, a first motion track of the user on the x-y plane can be obtained very easily.
S5. acquiring a second motion track of the user in a direction perpendicular to the imaging plane according to the change of a characteristic length on the image contour and/or the change of a focal distance of the camera. The shorter the distance from the user to the camera is, the larger the generated image is. Therefore, when the user moves towards the camera, the generated image may be gradually amplified, so that it can be judged that the user moves towards the camera according to the gradual increase of the characteristic length on the image contour. However, when the user moves away from the camera, the generated image may be gradually reduced, so that it can be judged that the user moves away from the camera according to the gradual reduction of the characteristic length on the image contour. The characteristic length can be a hand contour length/width, a leg contour length/width, a head contour length/width, etc., for example, it can be judged that the hand moves towards the camera when it is detected that the hand contour length/width is increased, and it can be judged that the hand moves away from the camera when it is detected that the hand contour length/width is reduced, so that the change of each trunk in a z direction can be judged. Meanwhile, when the user moves in the direction perpendicular to the imaging plane, i.e. the z direction, the camera can change a focal distance continuously to achieve clear imaging when capturing a user image, and therefore, it can be judged whether the user moves towards the camera or moves away from the camera according to the change of the focal distance of the camera. The motion track of the user in the direction perpendicular to the imaging plane can be judged in one of the two modes. Of course, in order to obtain a more accurate result, synthetic judgment can also be conducted according to the two modes, so as to obtain a more accurate result.
S6. generating motion sensing data according to the first motion track and the second motion track. A motion track of the user in a three-dimensional space can be obtained by combining the first motion track on the imaging plane with the second motion track in the direction perpendicular to the imaging plane, so that the motion sensing data can be obtained. The motion sensing data is input to a smart television or a computer having a motion sensing function, so that the user can experience a motion sensing game.

For the intelligent equipment-based motion sensing control method according to the embodiments of the present invention, only a camera on the intelligent equipment such as a smart cellphone, etc. is used to acquire user image data and obtain a first motion track of a user on an imaging plane and a second motion track in a direction perpendicular to the imaging plane according to the image data, thereby obtaining a motion track of the user in a three-dimensional space so as to generate motion sensing data, and therefore, the user can experience the motion sensing technology without additional equipment, which is beneficial to the popularization and application of the motion sensing technology.

The second motion track of the user in the direction perpendicular to the imaging plane is calculated according to the change of a characteristic length on the image contour and/or the change of a focal distance of the camera, which may be difficult to meet the requirements of some occasions requiring more accurate control, and therefore, it is necessary to correct the second motion track. For this reason, there is a need to add a distance measurement module so as to more accurately obtain the distance from the user to the camera in the z direction. The distance measurement module can be an infrared distance measurement module or a laser distance measurement module. The distance measurement module can be connected to the intelligent equipment such as a smart cellphone, etc. in a wired or wireless mode, so as to transmit the measured distance to the intelligent equipment. The intelligent equipment acquires the distance, which is obtained by the measurement of the distance measurement module, from each portion of the body of the user to the camera, corrects the second motion track according to the obtained distance, and finally generates more accurate motion sensing data according to the first motion track and the corrected second motion track.

The embodiments of the present invention also provide an intelligent equipment-based motion sensing control system, the intelligent equipment being provided with a camera. The system includes:
a collection unit 1 for collecting user image data;
an image contour acquisition unit 3 for acquiring an image contour of a user according to the user image data;
a first motion track unit 4 for acquiring a first motion track of the user on an imaging plane according to the image contour;
a second motion track unit 5 for acquiring a second motion track of the user in a direction perpendicular to the imaging plane according to the change of a characteristic length on the image contour and/or the change of a focal distance of the camera, wherein preferably, the characteristic length includes a hand contour length/width, a leg contour length/width or a head contour length/width; and
a motion sensing data unit 7 for generating motion sensing data according to the first motion track and the second motion track.

For the intelligent equipment-based motion sensing control system according to the embodiments of the present invention, only a camera on the intelligent equipment such as a smart cellphone, etc. is used to acquire user image data and obtain a first motion track of a user on an imaging plane and a second motion track in a direction perpendicular to the imaging plane according to the image data, thereby obtaining a motion track of the user in a three-dimensional space so as to generate motion sensing data, and therefore, the user can experience the motion sensing technology without additional equipment, which is beneficial to the popularization and application of the motion sensing technology.

Preferably, the above-mentioned intelligent equipment-based motion sensing control system further includes: a separation unit 2 for separating a user image from a foreground and a background between the steps of collecting, by the collection unit 1, user image data and acquiring, by the image contour acquisition unit 3, an image contour of a user according to the user image data. Therefore, the interference of the foreground and background images can be reduced, thereby reducing the computational load of the post processing of the processor.

Preferably, the above-mentioned intelligent equipment-based motion sensing control system further includes: a correction unit 6 for calibrating the second motion track according to the distance, which is obtained by the measurement of a distance measurement module, from each portion of the body of the user to the camera between the steps of acquiring, by the second motion track unit 5, a second motion track of the user in a direction perpendicular to the imaging plane according to the change of a characteristic length on the image contour and/or the change of a focal distance of the camera and generating, by the motion sensing data unit 7, motion sensing data according to the first motion track and the second motion track. Preferably, the distance measurement module is an infrared distance measurement module or a laser distance measurement module. Therefore, more accurate motion sensing data can be obtained, thereby meeting the requirements of some occasions requiring more accurate control.

The embodiments of the present invention also provide an intelligent equipment. The intelligent equipment can be a smart cellphone, a tablet personal computer, a laptop, etc. The intelligent equipment includes:
a camera for collecting user image data; and
a processor for acquiring an image contour of a user according to the user image data, acquiring a first motion track of the user on an imaging plane according to the image contour, acquiring a second motion track of the user in a direction perpendicular to the imaging plane according to the change of a characteristic length on the image contour and/or the change of a focal distance of the camera, and generating motion sensing data according to the first motion track and the second motion track.
Therefore, a first motion track of a user on an imaging plane and a second motion track in a direction perpendicular to the imaging plane can be obtained only by the intelligent equipment of the embodiments of the present invention, thereby obtaining a motion track of the user in a three-dimensional space so as to generate motion sensing data, and therefore, the user can experience the motion sensing technology without additional equipment, which is beneficial to the popularization and application of the motion sensing technology.

Preferably, the processor is also used for receiving the distance, which is obtained by the measurement of an external distance measurement module, from each portion of the body of the user to the camera, and calibrating the second motion track according to the distance. Therefore, more accurate motion sensing data can be obtained, thereby meeting the requirements of some occasions requiring more accurate control.

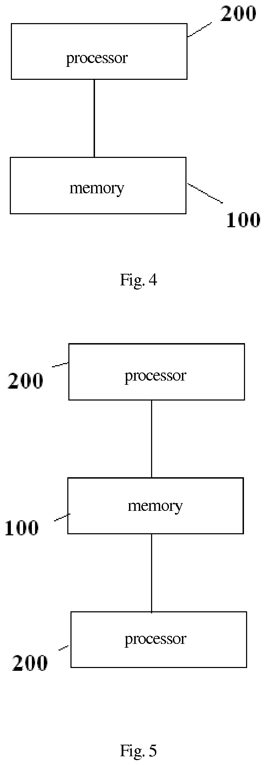

The embodiments of the present invention provide an intelligent equipment-based motion sensing control system, the intelligent equipment being provided with a camera, the system includes one or more processors 200; a memory 100; and one or more programs, stored in the memory 100, and when executed by the one or more processors 200 performing the following steps of acquiring an image contour of a user, according to the user image data, acquiring a first motion track of the user on an imaging plane, according to the image contour; acquiring a second motion track of the user in a direction perpendicular to the imaging plane, according to the change of a characteristic length on the image contour and/or the change of a focal distance of the camera; and generating motion sensing data, according to the first motion track and the second motion track. The system may include one processor 200 as illustrated in Fig. 4, or include two processors 200 as illustrated in Fig. 5.

Preferably, a user image is separated from a foreground and a background, between the steps of collecting user image data and acquiring an image contour of a user according to the user image data.

Preferably, the second motion track is calibrated, between the steps of acquiring a second motion track of the user in a direction perpendicular to the imaging plane according to the change of a characteristic length on the image contour and/or the change of a focal distance of the camera and generating motion sensing data according to the first motion track and the second motion track, according to the distance from each portion of the body of the user to the camera, which is obtained by the measurement of a distance measurement module.

It should be appreciated by those skilled in the art that the embodiments of the present invention may be provided as methods, devices or computer program products. Therefore, the present invention may adopt the form of a complete hardware embodiment, a complete software embodiment or an embodiment of software and hardware in combination. Moreover, the present invention may adopt the form of a computer program product implemented on one or more computer-useable storage media (including but not limited to a magnetic disk memory, a CD-ROM, an optic memory, and the like) containing computer-usable program codes.

The present invention is described with reference to flow charts and/or block diagrams of the methods, devices (systems) and computer program products according to the embodiments of the present invention. It should be understood that each flow step and/or block in the flow charts and/or block diagrams as well as combination of flow steps and/or blocks in the flow charts and/or block diagrams may be implemented by computer program instructions. These computer program instructions may be loaded onto a general computer, a dedicated computer, an embedded processor or a processor of other programmable data processing devices to produce a machine, so that a device for achieving functions designated in one or more flow steps of the flow charts and/or in one or more blocks of the block diagrams is produced by means of the instructions executed by the computer or the processor of other programmable data processing devices.

These computer program instructions may also be stored in a computer-readable memory capable of guiding the computer or other programmable data processing devices to work in a specific mode, so as to produce a manufactured product including an instruction device by means of the instructions stored in the computer-readable memory, and the instruction device implements the functions designated in one or more flow steps of the flow charts and/or in one or more blocks of the block diagrams.

These computer program instructions may also be loaded onto a computer or other programmable data processing devices, so that a series of operation steps are executed on the computer or other programmable devices to produce processing implemented by the computer, and the instructions executed on the computer or other programmable data processing devices provide steps for implementing the functions designated in one or more flow steps of the flow charts and/or in one or more blocks of the block diagrams.

Obviously, it should be noted that the above embodiments are merely used for illustrating rather than limiting the technical solutions of the present application; although the present application is illustrated in detail with reference to the aforementioned embodiments, it should be understood by those of ordinary skill in the art that modifications may still be made on the technical solutions disclosed in the aforementioned respective embodiments, or equivalent substitutions may be made to part of technical characteristics thereof; and these modifications or substitutions shall not make the nature of the corresponding technical solutions depart from the spirit and scope of the technical solutions of the respective embodiments of the present disclosure.

## Claims

1. An intelligent equipment-based motion sensing control method, the intelligent equipment being provided with a camera, **characterized in that** the method comprises:
collecting user image data;
acquiring an image contour of a user, according to the user image data;
acquiring a first motion track of the user on an imaging plane, according to the image contour;
acquiring a second motion track of the user in a direction perpendicular to the imaging plane, according to the change of a characteristic length on the image contour and/or the change of a focal distance of the camera; and
generating motion sensing data, according to the first motion track and the second motion track.

2. The method according to claim 1, **characterized in that** the characteristic length comprises a hand contour length/width, a leg contour length/width or a head contour length/width.

3. The method according to claim 1, **characterized in** further comprising separating a user image from a foreground and a background, between the steps of collecting user image data and acquiring an image contour of a user according to the user image data.

4. The method according to any one of claims 1-3, **characterized in** further comprising calibrating the second motion track, between the steps of acquiring a second motion track of the user in a direction perpendicular to the imaging plane according to the change of a characteristic length on the image contour and/or the change of a focal distance of the camera and generating motion sensing data according to the first motion track and the second motion track, according to the distance from each portion of the body of the user to the camera, which is obtained by the measurement of a distance measurement module.

5. The method according to claim 4, **characterized in that** the distance measurement module is an infrared distance measurement module or a laser distance measurement module.

6. An intelligent equipment-based motion sensing control system, the intelligent equipment being provided with a camera, **characterized in that** the system comprises:
a collection unit for collecting user image data;
an image contour acquisition unit for acquiring an image contour of a user according to the user image data;
a first motion track unit for acquiring a first motion track of the user on an imaging plane according to the image contour;
a second motion track unit for acquiring a second motion track of the user in a direction perpendicular to the imaging plane according to the change of a characteristic length on the image contour and/or the change of a focal distance of the camera; and
a motion sensing data unit for generating motion sensing data according to the first motion track and the second motion track.

7. The system according to claim 6, **characterized in** further comprising:
a separation unit for separating a user image from a foreground and a background between the steps of collecting, by the collection unit, user image data and acquiring, by the image contour acquisition unit, an image contour of a user according to the user image data.

8. The system according to claim 6 or 7, **characterized in** further comprising:
a correction unit for calibrating the second motion track according to the distance, which is obtained by the measurement of a distance measurement module, from each portion of the body of the user to the camera between the steps of acquiring, by the second motion track unit, a second motion track of the user in a direction perpendicular to the imaging plane according to the change of a characteristic length on the image contour and/or the change of a focal distance of the camera and generating, by the motion sensing data unit, motion sensing data according to the first motion track and the second motion track.

9. An intelligent equipment, **characterized in** comprising:
a camera for collecting user image data; and
a processor for acquiring an image contour of a user according to the user image data, acquiring a first motion track of the user on an imaging plane according to the image contour, acquiring a second motion track of the user in a direction perpendicular to the imaging plane according to the change of a characteristic length on the image contour and/or the change of a focal distance of the camera, and generating motion sensing data according to the first motion track and the second motion track.

10. The intelligent equipment according to claim 9, **characterized in that** the processor is also used for receiving the distance, which is obtained by the measurement of an external distance measurement module, from each portion of the body of the user to the camera, and calibrating the second motion track according to the distance.

11. An intelligent equipment-based motion sensing control system, the intelligent equipment being provided with a camera, **characterized in that** the system comprises:
one or more processors; a memory; and one or more programs, stored in the memory, and when executed by the one or more processors performing the following steps of
acquiring an image contour of a user, according to the user image data,
acquiring a first motion track of the user on an imaging plane, according to the image contour;
acquiring a second motion track of the user in a direction perpendicular to the imaging plane, according to the change of a characteristic length on the image contour and/or the change of a focal distance of the camera; and generating motion sensing data, according to the first motion track and the second motion track.

12. The system according to claim 11, **characterized in** comprising separating a user image from a foreground and a background between the steps of collecting user image data and acquiring an image contour of a user according to the user image data..

13. The system according to any one of claims 11 or 12, **characterized in** further comprising calibrating the second motion track, between the steps of acquiring a second motion track of the user in a direction perpendicular to the imaging plane according to the change of a characteristic length on the image contour and/or the change of a focal distance of the camera and generating motion sensing data according to the first motion track and the second motion track, according to the distance from each portion of the body of the user to the camera, which is obtained by the measurement of a distance measurement module.
